(19) Europäisches Patentamt / European Patent Office / Office européen des brevets

(11) **EP 2 512 994 B1**

(12) **EUROPÄISCHE PATENTSCHRIFT**

(45) Veröffentlichungstag und Bekanntmachung des Hinweises auf die Patenterteilung:
**30.04.2014 Patentblatt 2014/18**

(21) Anmeldenummer: **10796359.7**

(22) Anmeldetag: **15.12.2010**

(51) Int Cl.:
***C02F 1/42*** *(2006.01)*

(86) Internationale Anmeldenummer:
**PCT/EP2010/069720**

(87) Internationale Veröffentlichungsnummer:
**WO 2011/080075 (07.07.2011 Gazette 2011/27)**

(54) **ROHWASSERHÄRTEBESTIMMUNG IN EINER WASSERBEHANDLUNGSANLAGE ÜBER DIE LEITFÄHIGKEIT DES WEICH- ODER VERSCHNITTWASSERS**

RAW WATER HARDNESS DETERMINATION IN A WATER TREATMENT SYSTEM VIA THE CONDUCTIVITY OF SOFT OR BLENDED WATER

DÉTERMINATION DE LA DURETÉ DE L'EAU NON TRAITÉE DANS UNE INSTALLATION DE TRAITEMENT D'EAU AU MOYEN DE LA CONDUCTIVITÉ DE L'EAU DOUCE OU DE L'EAU DE DILUTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2009 DE 102009055007**

(43) Veröffentlichungstag der Anmeldung:
**24.10.2012 Patentblatt 2012/43**

(73) Patentinhaber: **Judo Wasseraufbereitung GmbH 71364 Winnenden (DE)**

(72) Erfinder: **SÖCKNICK, Ralf 70806 Kornwestheim (DE)**

(74) Vertreter: **Kohler Schmid Möbus Patentanwälte Ruppmannstraße 27 70565 Stuttgart (DE)**

(56) Entgegenhaltungen:
**EP-A1- 1 002 495     WO-A2-2009/071066
DE-A1- 10 011 692     DE-A1-102007 013 203**

**Beschreibung**

Die Erfindung betrifft ein Verfahren zum Betrieb einer Wasserbehandlungsanlage, mit

- einer Enthärtungsvorrichtung, insbesondere umfassend ein Ionentauscherharz,
- einem Leitfähigkeitssensor,
- einer elektronischen Steuereinrichtung und
- einer automatisch verstellbaren Verschneideeinrichtung zum Mischen eines Verschnittwasserstromes $V(t)_{verschnitt}$ aus einem ersten, enthärteten Teilstrom $V(t)_{teil1weich}$ und einem zweiten, rohwasserführenden Teilstrom $V(t)_{teil2roh}$, wobei die Leitfähigkeit $LF_{weich}$ des enthärteten Wassers oder die Leitfähigkeit $LF_{verschnitt}$ des Verschnittwassers experimentell bestimmt wird.

Ein solches Verfahren ist bekannt geworden aus der DE 10 2007 013 203 A1.

Wasserenthärtung wird überall da eingesetzt, wo über die üblichen Versorgungssysteme (etwa das Trinkwassernetz) lediglich relativ hartes Wasser zur Verfügung steht, jedoch aus technischen Gründen oder Komfortgründen ein weicheres Wasser erwünscht ist.

Bei der Wasserenthärtung werden Enthärtungsvorrichtungen eingesetzt, die meist nach dem Ionenaustauschverfahren arbeiten. Die im Wasser enthaltenen Härtebildner (Calcium- und Magnesium-Ionen) werden dabei in einem Ionentauscherharz gegen Natrium-Ionen ausgetauscht. Bei Erschöpfung des Ionentauscherharzes muss dieses regeneriert werden, etwa durch Spülung mit einer Salzsole.

Aus technischen oder wirtschaftlichen Gründen ist es oft notwendig oder erwünscht, kein vollenthärtetes Wasser, sondern Wasser mit einer mittleren, jedoch eng definierten Wasserhärte zur Verfügung zu haben. So kann vollständig enthärtetes Wasser zu Korrosionsproblemen führen, wenn eine Schutzschichtbildung in der nachgeschalteten Rohrleitungsinstallation nicht mehr möglich ist. Zudem wird bei einer Vollenthärtung die Kapazität des Enthärters schnell erschöpft, und es muss frühzeitig regeneriert werden. Dies ist mit einem hohen Salzverbrauch und damit hohen Kosten verbunden. Zur Durchführung einer Teilenthärtung ist eine Vorrichtung (Verschneideeinrichtung) zum Mischen von enthärtetem Wasser (auch als Reinwasser oder Weichwasser bezeichnet) und Rohwasser notwendig. In der Regel ist es erwünscht, die Wasserhärte im Verschnittwasser, das ist das Gemisch von enthärtetem Wasser und Rohwasser, einzustellen und zu steuern.

Die DE 10 2007 059 058 B3 beschreibt eine Wasserenthärtungsanlage, bei der die Leitfähigkeit des Rohwassers mittels eines Leitfähigkeitssensors gemessen wird. Die Gesamthärte des Rohwassers, die zur Steuerung der Regeneration bzw. der Verschneideeinrichtung verwendet wird, wird anhand der Kalibrierkennlinien F1 bzw. F2 aus der gemessenen Leitfähigkeit des Rohwassers abgeleitet.

Leitfähigkeitssensoren sind kostengünstig und einfach in ihrer Anwendung, haben jedoch den Nachteil, dass sie als Messsonden Elektroden verwenden, die beim Einsatz in hartem Wasser verkalken können. Durch Bildung einer Kalkschicht auf den Elektrodenoberflächen kann es zu Fehlfunktionen der Leitfähigkeitssensoren kommen.

Die DE 100 11 692 A1 beschreibt einen Haushaltsgerät, insbesondere eine Geschirrspülmaschine, bei der Rohwasser mit einem Verschneideventil teilweise über einen Enthärter und teilweise direkt zu einem Zufluss eines Spülraums geleitet wird. Im Zufluss ist ein Leitfähigkeitssensor zur Härtebestimmung angeordnet.

Die DE 10 2007 013 203 A1 zeigt eine Vorrichtung zur Wasseraufbereitung, bei der Leitwertsonden eingangsseitig und ausgangsseitig angeordnet sind, um die Rohwasserqualität und die Qualität eines verschnittenen Wassers zu messen. Abhängig vom Erschöpfungsgrad wird das Verschnittverhältnis eingestellt. Das Verschnittverhältnis kann alternativ auch unmittelbar auf einen Leitwert an der ausgangsseitigen Sonde eingeregelt werden.

Die EP 1 002 495 A1 beschreibt ein Verfahren zur Wasserenthärtung und Bestimmung eines Regenerierzeitpunkts bei einer programmgesteuerten Geschirrspülmaschine. Rohwasser und Weichwasser werden in Abhängigkeit von der Rohwasserhärte und der Weichwasserhärte gemischt; hierfür können Härtegradsensoren eingesetzt werden. Wenn sich die Härte des Weichwassers erhöht, wird regeneriert.

Aufgabe der Erfindung

Es ist die Aufgabe der vorliegenden Erfindung, eine kostengünstige und dauerhaft zuverlässige Steuerung einer Wasserbehandlungsanlage, insbesondere der Regeneration und der Verschneidung, zu ermöglichen.

Kurze Beschreibung der Erfindung

Diese Aufgabe wird gelöst durch ein Verfahren der eingangs genannten Art, das dadurch gekennzeichnet ist, dass aus der experimentell bestimmten Leitfähigkeit $LF_{weich}$ des enthärteten Wassers oder $LF_{verschnitt}$ des Verschnittwassers die Leitfähigkeit $LF_{roh}$ des Rohwassers und/oder die Gesamthärte des Rohwassers abgeleitet wird,

wobei bei der Ableitung der Leitfähigkeit $LF_{roh}$ des Rohwassers und/oder der Gesamthärte des Rohwassers aus der experimentell bestimmten Leitfähigkeit $LF_{weich}$ des enthärteten Wassers oder $LF_{verschnitt}$ des Verschnittwassers mittels einer oder mehrerer Funktionen eine Korrektur der unterschiedlichen Leitfähigkeit eines Calzium- oder Magnesiumions einerseits und zweier Natrium-Ionen andererseits erfolgt,

und dass die abgeleitete Leitfähigkeit $LF_{roh}$ des Rohwassers und/oder Gesamthärte des Rohwassers dazu verwendet wird, die Härte des Verschnittwasserstroms $V(t)_{verschnitt}$ durch eine entsprechende Einstellung des Mischungsverhältnisses der beiden Teilströme $V(t)_{teil1weich}$ und $V(t)_{teil2roh}$ auf einen vorgegebenen Sollwert (SW) einzustellen.

Gemäß der vorliegenden Erfindung wird zur Bestimmung der Härte des Rohwassers, die typischerweise ihrerseits über die Leitfähigkeit des Rohwassers erhalten wird, ein Leitfähigkeitssensor eingesetzt. Dieser Leitfähigkeitssensor braucht jedoch nicht im rohwasserführenden Bereich der Wasserbehandlungsanlage angeordnet werden, sondern kann im weich- oder verschnittwasserführenden Bereich der Wasserbehandlungsanlage angeordnet werden. Dadurch ist der Leitfähigkeitssensor gut vor Verkalkung geschützt, und die Funktionsfähigkeit des kostengünstigen Leitfähigkeitssensors ist dauerhaft sichergestellt.

Die von einem Leitfähigkeitssensor erfasste Leitfähigkeit stellt einen Summenparameter dar, der die im Wasser gelösten Ionen erfasst. Die Leitfähigkeit ist bei nicht enthärtetem Wasser (Rohwasser) näherungsweise proportional zur Wasserhärte, d.h. zum Gehalt an Caicium- und Magnesium-Ionen.

Bei der Wasserenthärtung werden die im Wasser enthaltenen Härtebildner (Calcium- und Magnesium-Ionen) in einem Ionentauscherharz gegen Natrium-Ionen ausgetauscht. Dabei wird ein Calcium- bzw. Magnesium-Ion durch zwei Natrium-Ionen ersetzt, und die Leitfähigkeit im enthärteten Wasser ändert sich entsprechend.

Das enthärtete Wasser (Weichwasser) ist frei von Calcium- und Magnesium-Ionen. Trotzdem verhält sich die im enthärteten Wasser gemessene Leitfähigkeit proportional zum Gehalt an Härtebildnern im ursprünglichen Rohwasser. Im enthärteten Wasser sind lediglich die Härtebildner stöchiometrisch gegen Natrium-Ionen ausgetauscht; die Zusammensetzung und Konzentration der übrigen Ionen bleibt jedoch unverändert. Daher kann aus der gemessenen Leitfähigkeit des enthärteten Wassers auf die Leitfähigkeit des Rohwassers und somit auf die Härte des Rohwassers rückgeschlossen werden. Dies macht sich die vorliegende Erfindung zu nutze.

Hierzu wird im Rahmen der Erfindung aus dem gemessenen Wert der Leitfähigkeit im enthärteten Wasser mittels einer geeigneten Funktion oder mehreren geeigneten Funktionen (oft in der Steuerung hinterlegt als Kennlinien) die Leitfähigkeit des Rohwassers und/oder die Gesamthärte des Rohwassers abgeleitet. Die Funktion bzw. die Funktionen korrigieren die unterschiedliche Leitfähigkeit eines Calcium- bzw. Magnesium-Ions einerseits und zweier Natrium-Ionen andererseits. Wird die Leitfähigkeit im Verschnittwasser statt im voll enthärteten Wasser experimentell bestimmt, so muss die Korrektur entsprechend den prozentualen Anteilen der beiden Teilströme $V(t)_{teil1weich}$ und $V(t)_{teil2roh}$ gewichtet werden.

Es wird angemerkt, dass erfindungsgemäß das Ableiten der Leitfähigkeit $LF_{roh}$ des Rohwassers und der Gesamthärte des Rohwassers typischerweise ohne eine vorherige Bestimmung der Verschnittwasserhärte erfolgt. Die Verschnittwasserhärte kann über die abgeleitete Rohwasserhärte und die relativen Anteile der Teilströme ermittelt werden.

Durch die experimentelle Bestimmung der Leitfähigkeit im enthärteten bzw. teilenthärteten Wasser ist es möglich, die Oberflächen der Messelektroden dauerhaft kalkfrei zu halten. Die Leitfähigkeitssensoren sind dadurch wartungsfrei und liefern stets korrekte Messwerte.

Bevorzugte Varianten der Erfindung

*Varianten mit Bestimmung der Leitfähigkeit des Weichwasser*

Im Rahmen der Erfindung kann der Leitfähigkeitssensor im Weichwasserbereich angeordnet werden. In diesem Fall braucht für die Bestimmung der Rohwassereigenschaften wie Rohwasserleitfähigkeit oder Rohwasserhärte keine Gewichtung entsprechend der Teilströme durchgeführt werden; das Verfahren ist dann besonders einfach. Zur Bestimmung der Rohwasserhärte kann zunächst die Leitfähigkeit $LF_{roh}$ des Rohwassers aus der Leitfähigkeit $LF_{weich}$ des enthärteten Wassers abgeleitet werden, und dann die Leitfähigkeit $LF_{roh}$ des Rohwassers mit bekannten Kalibrierfunktionen in eine Rohwasserhärte umgerechnet werden. Alternativ ist es auch möglich, die Rohwasserhärte direkt aus der Leitfähigkeit $LF_{weich}$ des enthärteten Wassers zu bestimmen.

Bei einer vorteilhaften Variante des erfindungsgemäßen Verfahrens wird aus der experimentell bestimmten Leitfähigkeit $LF_{weich}$ des enthärteten Wassers mittels einer Umrechnungsfunktion UF die Leitfähigkeit $LF_{roh}$ des Rohwassers abgeleitet, mit $LF_{roh} = UF(LF_{weich})$. Die Umrechnungsfunktion kann beispielsweise als Kennlinie, Polynomfunktion oder als Wertetabelle in der elektronischen Steuereinrichtung hinterlegt sein. Aus der RohwasserLeitfähigkeit kann leicht mittels bekannter Kalibrierfunktionen die Gesamthärte im Rohwasser bestimmt werden; die Anwendung unterschiedlicher Kalibrierfunktionen für verschiedene Steuerungsaspekte ist leicht möglich.

Besonders bevorzugt ist eine Weiterentwicklung dieser Variante, wonach die Umrechnungsfunktion UF als ein konstanter Umrechnungsfaktor UFK gewählt ist, mit $LF_{roh} = UFK*LF_{weich}$, wobei $0{,}90 \leq UFK \leq 0{,}99$, und bevorzugt $0{,}93 \leq UFK \leq 0{,}97$. Bei der Enthärtung, d.h. bei stöchiometrischem Tausch der Härtebildner Calcium- und Magnesium-Ionen gegen Natrium-Ionen, steigt die Leitfähigkeit leicht an. Die Untersuchung verschiedener Wässer hat gezeigt, dass der prozentuale Anstieg der Leitfähigkeit durch Enthärtung unabhängig von der Wasserqualität nahezu konstant um die 5% beträgt, entsprechend einem UFK von ca. 0,95, was einen bevorzugten Wert darstellt. Mit dieser Weiterentwicklung können die Rechenoperationen zur Bestimmung der Leitfähigkeit $LF_{roh}$ des Rohwassers stark vereinfacht werden.

Gemäß einer anderen Weiterentwicklung der obigen Variante ist vorgesehen, dass eine Gesamthärte I des Rohwassers, die zur Steuerung eines Regeneriervorgangs der Enthärtungsvorrichtung verwendet wird, mittels einer ersten Kalibrierfunktion K1 aus der abgeleiteten Leitfähigkeit $LF_{roh}$ des Rohwassers abgeleitet wird, und dass eine Gesamthärte II des Rohwassers, die zur Steuerung der Verschneideeinrichtung verwendet wird, mittels einer zweiten Kalibrierfunktion K2 aus der abgeleiteten Leitfähigkeit $LF_{roh}$ des Rohwassers abgeleitet wird.

Die beiden Kalibrierfunktionen K1 und K2 berücksichtigen, dass die erfasste Leitfähigkeit einen Summenparameter darstellt, der alle im Wasser gelösten Ionen erfasst, und die Leitfähigkeit lediglich näherungsweise proportional zur Wasserhärte, d.h. zum Gehalt an Calcium- und Magnesium-Ionen, ist.

Die erste Kalibrierfunktion K1 (meist in der Steuereinrichtung hinterlegt als Kalibrierkurve oder Kalibrierkennlinie) ist bevorzugt so definiert, dass die aus ihr bestimmte Wasserhärte zumindest in guter Näherung der maximalen, bei dieser Leitfähigkeit vorkommenden Wasserhärte entspricht. Damit wird vermieden, dass ein Regeneriervorgang zu spät gestartet wird, so dass ein Härtedurchbruch zuverlässig vermieden wird. Die erste Kalibrierfunktion K1 verwendet typischerweise eine Kalibrierung von 28-35 $\mu$S/cm pro °dH, insbesondere 30-33 $\mu$S/cm pro °dH (mit °dH: Grad deutscher Härte).

Die aus der zweiten Kalibrierfunktion K2 (ebenfalls meist in der Steuereinrichtung hinterlegt als Kalibrierkurve oder Kalibrierkennlinie) bestimmte Wasserhärte ergibt sich bevorzugt als mittlerer Wert aller bei dieser Leitfähigkeit vorkommenden Wasserhärten. Mit dieser zweiten Kalibrierfunktion ist es möglich, eine größere Übereinstimmung zwischen der aus der Leitfähigkeit bestimmten Härte des Rohwassers und der tatsächlichen Wasserhärte im Rohwasser zu erhalten. Damit wird auch die Einstellung bzw. Steuerung der Wasserhärte im Verschnittwasser genauer. Die zweite Kalibrierfunktion K2 verwendet typischerweise eine Kalibrierung von 35-44 $\mu$S/cm pro °dH, insbesondere 38-41 $\mu$S/cm pro °dH.

Durch die Verwendung der beiden Kalibrierfunktionen ist eine genaue Verschneidung gewährleistet, wobei gleichzeitig Härtedurchbrüche zuverlässig vermieden werden.

K1 und K2 sind bevorzugt unterschiedlich, insbesondere wobei die aus der ersten Kalibrierfunktion K1 abgeleitete Gesamthärte I zumindest abschnittweise größer ist als die aus der zweiten Kalibrierfunktion K2 abgeleitete Gesamthärte II. Die Rohwasserhärte, die zur Steuerung des Regeneriervorgangs und der Verschneideeinrichtung verwendet wird, kann aus der gemessenen Leitfähigkeit nur näherungsweise bestimmt werden. Für den Regeneriervorgang und die Verschneideeinrichtung gelten unterschiedliche Anforderungen, die in den Normen DIN EN 14743 und DIN 19636-100 festgelegt sind. Durch die Verwendung unterschiedlicher Kalibrierfunktionen werden zwei Näherungswerte für die Gesamthärte des Rohwassers erhalten. Mit dem einen Näherungswert lässt sich der Regeneriervorgang derart steuern, dass ein Härtedurchbruch vermieden wird und gleichzeitig die in der DIN EN 14763 vorgegebene minimale Austauscherkapazität von 4 mol (400 g CaCO3) pro Kilo eingesetztem Regeneriersalz eingehalten wird, während der zweite Näherungswert die Verschneideeinrichtung derart genau steuert, dass die in der DIN 19636-100 festgelegten Toleranzgrenzen für das Verschnittwasser erfüllt sind.

Ebenfalls vorteilhaft ist eine Variante des erfindungsgemäßen Verfahrens, die dadurch gekennzeichnet ist, dass eine Gesamthärte I des Rohwassers, die zur Steuerung eines Regeneriervorgangs der Enthärtungsvorrichtung verwendet wird, direkt mittels einer ersten Gesamtkalibrierfunktion GK1 aus der experimentell bestimmten Leitfähigkeit $LF_{weich}$ des enthärteten Wassers abgeleitet wird, und dass eine Gesamthärte II des Rohwassers, die zur Steuerung der Verschneideeinrichtung verwendet wird, direkt mittels einer zweiten Gesamtkalibrierfunktion GK2 aus der experimentell bestimmten Leitfähigkeit $LF_{weich}$ des enthärteten Wassers abgeleitet wird. Ähnlich wie oben beschrieben kann durch die Verwendung der beiden Gesamtkalibrierfunktionen GK1 und GK2 eine genaue Verschneidung gewährleistet werden, wobei gleichzeitig Härtedurchbrüche zuverlässig vermieden werden. Die direkte Bestimmung der Rohwasserhärte (ohne zwischenzeitliche Bestimmung der Rohwasserleitfähigkeit) ist besonders schnell. Eine Gesamtkalibrierfunktion kann insbesondere einer Kombination von Umrechnungsfunktion und Kalibrierfunktion entsprechen, oder auch unmittelbar empirisch ermittelte Werte zuweisen. GK1 und GK2 sind bevorzugt unterschiedlich, insbesondere wobei die aus der ersten Gesamtkalibrierfunktion GK1 abgeleitete Gesamthärte I zumindest abschnittweise größer ist als die aus der zweiten Gesamtkalibrierfunktion GK2 abgeleitete Gesamthärte II.

*Varianten mit Bestimmung der Leitfähigkeit des Verschnittwassers*

Im Rahmen der Erfindung kann die Leitfähigkeit $LF_{roh}$ des Rohwassers auch aus der Leitfähigkeit $LF_{verschnitt}$

des Verschnittwassers, in der Regel unter Berücksichtigung des Verhältnisses der Teilströme $V(t)_{teil1weich}$ und $V(t)_{teil2roh}$, bestimmt werden. Hierbei kann eine echte Umrechnung der Leitfähigkeit $LF_{weich}$ des im Verschnittwasser enthaltenen enthärteten Wassers unter Gewichtung entsprechend den Teilströmen erfolgen. Alternativ kann zur Bestimmung der Leitfähigkeit $LF_{roh}$ des Rohwassers auch vereinfacht ein Multiplikator auf die Leitfähigkeit $LF_{verschnitt}$ des Verschnittwassers angewandt werden, welcher von den Teilströmen abhängt und mit zunehmendem Rohwasseranteil steigt; typischerweise beträgt der Multiplikator bei einen Rohwasseranteil von 0% ca. 0,95 (oder einen anderen den lokalen Verhältnissen entsprechenden Wert im Bereich 0,90 bis 0,99, bevorzugt im Bereich 0,93 bis 0,97), bei einem Rohwasseranteil von 100% beträgt der Multiplikator 1, und die Zwischenwerte des Multiplikators werden linear interpoliert. Daneben sind auch andere Näherungen im Rahmen der Erfindung möglich. Aus der (näherungsweise) ermittelten Leitfähigkeit $LF_{roh}$ des Rohwassers kann dann mittels bekannter Kalibrierfunktionen auf einfache Weise die Rohwasserhärte bestimmt (berechnet) werden. Es ist auch möglich, die Rohwasserhärte direkt aus der Leitfähigkeit $LF_{verschnitt}$ des Verschnittwassers, in der Regel unter Berücksichtigung des Verhältnisses der Teilströme $V(t)_{teil1weich}$ und $V(t)_{teil2roh}$, zu bestimmen.

Bei einer bevorzugten Variante des erfindungsgemäßen Verfahrens ist vorgesehen, dass die Leitfähigkeit $LF_{roh}$ des Rohwassers aus der experimentell bestimmten Leitfähigkeit $LF_{verschnitt}$ des Verschnittwassers mit der Formel

$$LF_{verschnitt} = \frac{V(t)_{teil1weich}}{V(t)_{verschnitt}} \cdot UF^{-1}(LF_{roh}) + \frac{V(t)_{teil2roh}}{V(t)_{verschnitt}} \cdot LF_{roh}$$

abgeleitet wird, insbesondere wobei die Formel nach $LF_{roh}$ aufgelöst ist,
wobei UF eine Umrechnungsfunktion bezeichnet, mit der aus der Leitfähigkeit $LF_{weich}$ des enthärteten Wassers die Leitfähigkeit $LF_{roh}$ des Rohwassers erhalten wird, mit $LF_{roh} = UF(LF_{weich})$, und $UF^{-1}$ die Umkehrfunktion von UF bezeichnet. Durch die Formel kann die Bestimmung der Rohwasserleitfähigkeit $LF_{roh}$ sehr genau unter Berücksichtigung der (relativen) Teilströme erfolgen. Mit der Umkehrfunktion $UF^{-1}$ der Umrechnungsfunktion kann in der Formel die Leitfähigkeit $LF_{weich}$ des enthärteten Wassers ersetzt werden gemäß $UF^{-1}(LF_{roh})=LF_{weich}$. Soweit erforderlich kann die Bestimmung von $LF_{roh}$ auch numerisch erfolgen, insbesondere wenn das Auflösen der Formel nach $LF_{roh}$ schwierig ist. Die (relativen) Teilströme können über Durchflussmesser direkt oder indirekt bestimmt werden, oder über die Verstellposition der Verschneideeinrichtung abgeschätzt werden.

Eine besonders bevorzugte Weiterentwicklung der obigen Verfahrensvariante sieht vor, dass die Umrechnungsfunktion UF als ein konstanter Umrechnungsfaktor UFK gewählt ist, mit $LF_{roh} = UFK*LF_{weich}$,
wobei $0,90 \leq UFK \leq 0,99$, und bevorzugt $0,93 \leq UFK \leq 0,97$,
so dass gilt

$$LF_{roh} = \frac{LF_{verschnitt}}{\left( \frac{V(t)_{teil1weich}}{UFK \cdot V(t)_{verschnitt}} + \frac{V(t)_{teil2roh}}{V(t)_{verschnitt}} \right)} .$$

Bei konstantem Umrechnungsfaktor ist die Bestimmung von $LF_{roh}$ erleichtert, insbesondere kann die obige Formel leicht nach $LF_{roh}$ aufgelöst werden.

Eine ebenfalls bevorzugte Weiterentwicklung ist dadurch gekennzeichnet, dass eine Gesamthärte I des Rohwassers, die zur Steuerung eines Regeneriervorgangs der Enthärtungsvorrichtung verwendet wird, mittels einer ersten Kalibrierfunktion K1 aus der abgeleiteten Leitfähigkeit $LF_{roh}$ des Rohwassers abgeleitet wird,
und dass eine Gesamthärte II des Rohwassers, die zur Steuerung der Verschneideeinrichtung verwendet wird, mittels einer zweiten Kalibrierfunktion K2 aus der abgeleiteten Leitfähigkeit $LF_{roh}$ des Rohwassers abgeleitet wird. Durch die Verwendung der beiden Kalibrierfunktionen K1 und K2 kann wie bereits oben beschrieben eine genaue Verschneidung gewährleistet werden, wobei gleichzeitig Härtedurchbrüche zuverlässig vermieden werden. K1 und K2 sind bevorzugt unterschiedlich, insbesondere wobei die aus der ersten Kalibrierfunktion K1 abgeleitete Gesamthärte I zumindest abschnittweise größer ist als die aus der zweiten Kalibrierfunktion K2 abgeleitete Gesamthärte II.

Ebenfalls bevorzugt ist eine Verfahrensvariante, die vorsieht, dass eine Gesamthärte I des Rohwassers, die zur Steuerung eines Regeneriervorgangs der Enthärtungsvorrichtung verwendet wird, direkt mittels einer ersten gewichteten Gesamtkalibrierfunktion GGK1 aus der experimentell bestimmten Leitfähigkeit $LF_{verschnitt}$ des Verschnittwassers und den beiden Teilströmen $V(t)_{teil1weich}$ und $V(t)_{teil2roh}$ abgeleitet wird,
und dass eine Gesamthärte II des Rohwassers, die zur Steuerung der Verschneideeinrichtung verwendet wird, direkt mittels einer zweiten gewichteten Gesamtkalibrierfunktion GGK2 aus der experimentell bestimmten Leitfähigkeit $LF_{verschnitt}$ des Verschnittwassers und den beiden Teilströmen $V(t)_{teil1weich}$ und $V(t)_{teil2roh}$ abgeleitet wird. Ähnlich wie oben beschrieben kann durch die Verwendung der beiden gewichteten Gesamtkalibrierfunktionen GGK1 und GGK2 eine genaue Verschneidung gewährleistet werden, wobei gleichzeitig Härtedurchbrüche zuverlässig vermieden werden. Die direkte Bestimmung der Rohwasserhärte (ohne zwischenzeitliche Bestimmung der Rohwasserleitfähigkeit) ist besonders schnell. GGK1 und GGK2 sind bevorzugt unterschiedlich, insbesondere wobei die aus der ersten gewichteten Gesamtkalibrierfunktion GGK1 abgeleitete Gesamthärte I zumindest abschnittsweise größer ist als die aus der zweiten gewichteten Gesamtkalibrierfunktion GGK2 abgeleitete Gesamthärte II. Die gewichtete Gesamtkalibrierfunktion kann insbesondere einer Kombination der obigen Formel zur Bestimmung von $LF_{roh}$ (welche die Umrechnungsfunktion bzw. deren Umkehrfunktion nutzt) und einer Kalibrierfunktion entsprechen, oder auch unmittelbar empirisch ermittelte Werte zuweisen.

*Erfindungsgemäße Wasserbehandlungsanlagen*

In den Rahmen der vorliegenden Erfindung fällt auch eine Wasserbehandlungsanlage, mit

- einer Enthärtungsvorrichtung, insbesondere umfassend ein Ionentauscherharz,
- einem Leitfähigkeitssensor,
- einer elektronischen Steuereinrichtung und
- einer automatisch verstellbaren Verschneideeinrichtung zum Mischen eines Verschnittwasserstromes $V(t)_{verschnitt}$ aus einem ersten, enthärteten Teilstrom $V(t)_{teil1weich}$ und einem zweiten, rohwasserführenden Teilstrom $V(t)_{teil2roh}$, wobei der Leitfähigkeitssensor im Bereich des enthärteten Wassers oder des Verschnittwassers angeordnet ist,

die dadurch gekennzeichnet ist,

dass die Steuereinrichtung zur Durchführung eines oben beschriebenen, erfindungsgemäßen Verfahrens eingerichtet ist. Die erfindungsgemäße Wasserbehandlungsanlage ist apparativ einfach aufgebaut. Der Leitfähigkeitssensor kann nicht verkalken und ist wartungsfrei. Eine regelmäßige Entkalkung entfällt. Die Steuereinrichtung kann alle für die Durchführung des Betriebsverfahrens notwendigen Funktionen, beispielsweise eine Umrechnungsfunktion UF oder eine Kalibrierfunktion, speichern.

Bei einer bevorzugten Ausführungsform der erfindungsgemäßen Wasserbehandlungsanlage weist die elektronische Steuereinrichtung einen Speicher mit mehreren abgespeicherten Kalibrierfunktionen (K1, K2) und/oder mit mehreren abgespeicherten Gesamtkalibrierfunktionen (GK1, GK2) und/oder mit mehreren abgespeicherten gewichteten Gesamtkalibrierfunktionen (GGK1, GGK2) zur Berechnung der Leitfähigkeit $LF_{roh}$ des Rohwassers und/oder der Gesamthärte des Rohwassers aus der Leitfähigkeit $LF_{weich}$ des enthärteten Wassers oder der Leitfähigkeit $LF_{verschnitt}$ des Verschnittwassers auf. Die Speicherung mehrerer oben angegebener Funktionen gestattet es, der Steuerung der Regeneration und der Steuerung der Verschneidung unterschiedliche Rohwasserhärten zugrunde zu legen und so die Sicherheit einer rechtzeitigen Regeneration und die Genauigkeit der Verschneidung gleichzeitig zu steigern.

Ebenfalls bevorzugt ist eine Ausführungsform, bei der wenigstens zwei Durchflussmessgeräte zur direkten oder indirekten experimentellen Bestimmung der Teilströme $V(t)_{teil1weich}$ und $V(t)_{teil2roh}$ vorhanden sind. Dadurch kann die Steuerung der Verschneidung und der Regeneration besonders genau erfolgen; insbesondere kann bei Anordnung des Leitfähigkeitssensors im Verschnittwasser eine exakte Gewichtung der Teilströme vorgenommen werden. Alternativ ist es möglich, über die Kenntnis der Verstellposition der Verschneideeinrichtung die relativen Anteile der Teilströme abzuschätzen. Eine erfindungsgemäße, oben beschriebene Wasserbehandlungsanlage kann in einem erfindungsgemäßen, oben beschriebenen Verfahren verwendet werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig.1   den schematischen Aufbau einer erfindungsgemäßen Wasserbehandlungsanlage;

Fig. 2   eine Diagramm-Darstellung der gemessenen Leitfähigkeit von Rohwasser ($LF_{roh}$) in Abhängigkeit von der gemessenen Leitfähigkeit nach einer Enthärtung ($LF_{weich}$) bei verschiedenen Trinkwässern;

Fig. 3     eine Diagramm-Darstellung der gemessenen Leitfähigkeit von Rohwasser ($LF_{roh}$) in Abhängigkeit von der titrimetrisch bestimmten Gesamthärte des Rohwassers bei verschiedenen Trinkwässern.

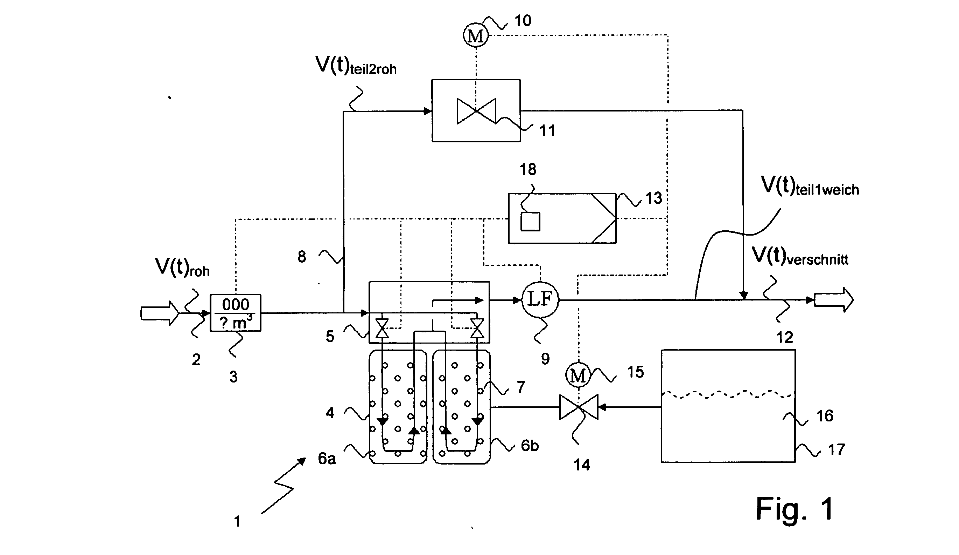

Die Fig.1 zeigt beispielhaft eine erfindungsgemäße Wasserbehandlungsanlage 1, die über einen Zulauf 2 an ein lokales Wasserversorgungssystem, etwa das Trinkwassernetz, angeschlossen ist. Der am Zulauf 2 fließende (gesamte) Rohwasserstrom $V(t)_{roh}$ passiert zunächst einen Durchflussmesser 3 und teilt sich anschließend in zwei Teilströme auf.

Ein erster Teil des (gesamten) Rohwasserstroms $V(t)_{roh}$ fließt einer Enthärtungsvorrichtung 4 zu, welche insbesondere einen Steuerkopf 5 sowie zwei Tanks 6a, 6b mit Ionentauscherharz 7 aufweist. Ein zweiter Teil fließt in eine Bypassleitung 8 ein.

Das in die Enthärtungsvorrichtung 4 einfließende Rohwasser durchströmt die beiden Tanks 6a, 6b mit Ionentauscherharz 7, wobei dieses vollständig enthärtet wird ($V(t)_{teil1weich}$). Dabei werden die Härtebildner Calcium- und Magnesium-Ionen stöchiometrisch gegen Natrium-Ionen ausgetauscht. Das enthärtete Wasser fließt anschließend durch einen Leitfähigkeitssensor 9, mit dem die Leitfähigkeit im enthärteten Teilstrom bestimmt wird.

Der zweite Teil des Rohwassers $V(t)_{teil2roh}$ in der Bypassleitung 8 passiert eine automatisch betätigbare Verschneideeinrichtung, hier ein mit einem Stellmotor 10 verstellbares Verschneideventil 11.

Der erste Teilstrom $V(t)_{teil1weich}$ und der zweite Teilstrom $V(t)_{teil2roh}$ werden schließlich zu einem Verschnittwasserstrom $V(t)_{verschnitt}$ vereint, welcher einem Ablauf 12 zufließt. Der Ablauf 12 ist an eine nachfolgende Wasserinstallation, etwa die Frischwasserleitungen eines Gebäudes, angeschlossen.

Die Messergebnisse des Leitfähigkeitssensors 9 und des Durchflussmessers 3 werden an eine elektronische Steuereinrichtung 13 übertragen.

Als erfindungsgemäße Besonderheit weist die Steuereinrichtung 13 einen Speicher 18 für (hier) mehrere Funktionen (bevorzugt hinterlegt als Kennlinien) auf, mit denen aus den Messergebnissen des Leitfähigkeitssensors 9 im enthärteten Wasserstrom $V(t)_{teil1roh}$ die momentane Wasserhärte des Rohwassers $WH_{roh}^{mom}$ bestimmt wird. Die Funktionen berücksichtigen, dass im enthärteten Teilstrom $V(t)_{teil1weich}$ die Calcium- und Magnesium-Ionen stöchiometrisch, d.h. jeweils ein Härtebildner gegen zwei Natrium-Ionen, ausgetauscht wurden, wodurch sich die Leitfähigkeit spezifisch geändert hat. Im Ausführungsbeispiel ist in der Steuereinrichtung 13 bzw. im Speicher 18 eine Umrechnungsfunktion UF hinterlegt, mit der die gemessene Leitfähigkeit $LF_{weich}$ des enthärteten Wassers in eine zugehörige Leitfähigkeit $LF_{roh}$ des Rohwassers umgerechnet wird. Weiterhin sind zwei Kalibrierfunktionen K1 und K2 hinterlegt, mittels denen die Leitfähigkeit $LF_{roh}$ des Rohwassers in eine Rohwasserhärte für die Zwecke der Regenerationssteuerung (über die Kalibrierfunktion K1) und in eine Rohwasserhärte für die Zwecke der Verschneidungssteuerung (über die Kalibrierfunktion 2) umgerechnet werden kann.

In der Steuereinrichtung ist ebenfalls ein gewünschter Sollwert (SW) der Wasserhärte des Verschnittwassers hinterlegt. Aus dem Sollwert (SW) der Verschnittwasserhärte und der momentanen Wasserhärte $WH_{roh}^{mom}$ im Rohwasser ermittelt die Steuereinrichtung 13 ein momentanes Soll-Verhältnis der Teilströme $V(t)_{teil1weich}$ und $V(t)_{teil2roh}$, durch welches sich die gewünschte Wasserhärte im Verschnittwasser ergibt. Die Anteile der beiden Teilströme $V(t)_{teil1weich}$ und $V(t)_{teil2roh}$ werden über die Einstellung der Verschneideeinrichtung festgelegt. Im gezeigten Ausführungsbeispiel werden die relativen Anteile der Teilströme aus der (bekannten) Verstellposition des Verschneideventils 11 abgeschätzt; alternativ kann auch ein zusätzlicher Durchflussmesser etwa in der Bypassleitung 8 vorgesehen sein, so dass sich der zweite Teilstrom $V(t)_{teil2roh}$ direkt und der erste Teilstrom $V(t)_{teil1weich}$ indirekt als Differenz von $V(t)_{roh}$ (gesamt) und $V(t)_{teil2roh}$ bestimmen lassen.

Die elektronische Steuereinrichtung 13 überwacht auch den Erschöpfungszustand des Ionentauscherharzes 7 in den beiden Tanks 6a, 6b. Bei Wasserentnahmen wird dabei die entnommene Wassermenge jeweils mit der zugehörigen momentanen Rohwasserhärte gewichtet und von der aktuellen Restkapazität abgezogen. Ist ein Tank erschöpft, so nimmt die elektronische Steuereinrichtung 13 den erschöpften Tank vom Netz und unterzieht diesen einer Regeneration. Hierfür wird ein Regenerationsventil 14 mit einem Stellmotor 15 durch die elektronische Steuereinrichtung 13 automatisch betätigt, wodurch Regeneriermittellösung (bevorzugt Salzsole) 16 aus einem Vorratsgefäß 17 durch den erschöpften Tank strömt.

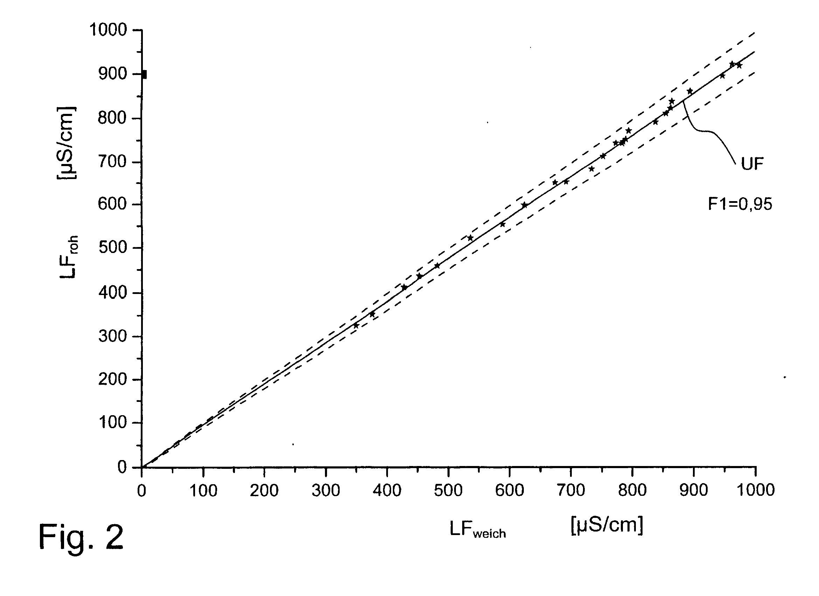

**Fig. 2** zeigt eine Diagramm-Darstellung der gemessenen Leitfähigkeit $LF_{roh}$ des Rohwassers in Abhängigkeit von der gemessenen Leitfähigkeit $LF_{weich}$ des zugehörigen enthärteten Wassers bei verschiedenen Trinkwässern.

Zur Erstellung des Diagramms von in Fig. 2 wurden Trinkwässer aus verschiedenen Versorgungsnetzen untersucht und deren Leitfähigkeit experimentell bestimmt. Die Trinkwässer wurden anschließend mit einer erfindungsgemäßen Wasserbehandlungsanlage 1 vollständig enthärtet und die Leitfähigkeit der enthärteten Wässer erneut experimentell bestimmt.

Fig. 2 zeigt, dass die Leitfähigkeit $LF_{weich}$ im enthärteten Wasser durch die Enthärtung geringfügig zunimmt und dass das Verhältnis F1 der Leitfähigkeit $LF_{roh}$ im Rohwasser zur Leitfähigkeit $LF_{weich}$ im enthärteten Wasser für sämtliche Wasserproben etwa $F1 = LF_{roh}/LF_{weich} = 0,95$ beträgt. Daraus resultiert in guter Näherung eine Umrechnungsfunktion UF mit einer linearen Steigung vom Betrag F1, d.h. die Umrechnungsfunktion UF hat einen konstanten Um-

rechnungsfaktor UFK=F1, entsprechend $LF_{roh}$=UFK*$LF_{weich}$. Sämtliche experimentellen Werte liegen innerhalb eines schmalen Bereichs, der durch die beiden gestrichelt dargestellten Geraden begrenzt wird. Dabei weist die untere gestrichelt dargestellte Gerade eine Steigung von 0,90 auf, während die Steigung der oberen gestrichelt dargestellten Geraden 0,99 beträgt.

Der geringfügige Anstieg der Leitfähigkeit im enthärteten Wasser rührt daher, dass zweiwertige Ladungsträger (Calcium- bzw. Magnesium-Ionen) jeweils gegen zwei einwertige Ladungsträger ausgetauscht werden.

Der näherungsweise lineare Zusammenhang zwischen der Leitfähigkeit des Rohwassers und des enthärteten Wassers ermöglicht erfindungsgemäß die Bestimmung der Leitfähigkeit des Rohwassers aus der experimentell bestimmten Leitfähigkeit des enthärteten Wassers mittels einer als einfache Kennlinie darstellbaren Umrechnungsfunktion UF in guter Näherung. Leitfähigkeitssensoren, die im enthärteten Wasser eingesetzt werden, können dabei nicht durch Kalkablagerungen in ihrer Funktion beeinträchtigt werden, so dass ein wartungsfreier Betrieb möglich ist.

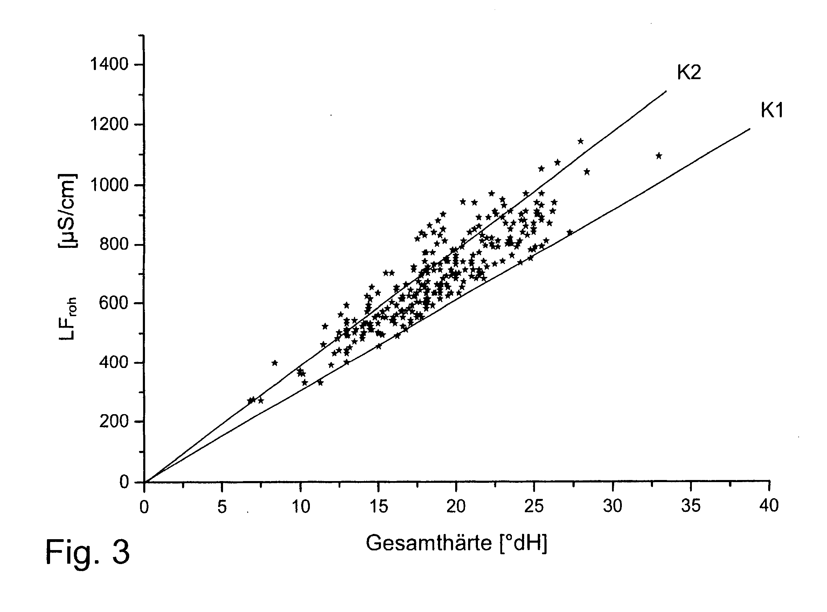

**Fig. 3** zeigt eine Diagramm-Darstellung der gemessenen Leitfähigkeit $LF_{roh}$ im Rohwasser in Abhängigkeit von der der titrimetrisch bestimmten Gesamthärte im Rohwasser bei verschiedenen Trinkwässern.

Zur Darstellung in Fig. 3 wurden ca. 300 verschiedene Trinkwässer in der Bundesrepublik Deutschland untersucht und deren Leitfähigkeit sowie die Gesamthärte bestimmt. Die Messung der Leitfähigkeit erfolgte mittels Konduktometer, während die Gesamthärte titrimetrisch ermittelt wurde.

Die Ableitung der Gesamthärte aus der Leitfähigkeit ist im Gegensatz zur titrimetrischen Bestimmungsmethode schnell und einfach durchführbar und deshalb zur Steuerung in Wasserenthärtungsanlagen weit verbreitet. Man erkennt aber in Fig. 3, dass sich im Allgemeinen aus der elektrischen Leitfähigkeit eines Wassers nicht auf einen exakten Härtewert schließen lässt, sondern nur auf einen Bereich, in dem die Wasserhärte tatsächlich liegen wird.

Für den Regeneriervorgang und die Verschneideeinrichtung gelten unterschiedliche Anforderungen, die in den Normen DIN EN 14743 und DIN 19636-100 festgelegt sind. Durch die Verwendung unterschiedlicher Kalibrierfunktionen K1 und K2 (hier Kalibrierkennlinien) werden zwei unterschiedliche Näherungswerte für die Gesamthärte des Rohwassers als Funktion der Leitfähigkeit $LF_{roh}$ des Rohwassers erhalten. Mit dem einen Näherungswert lässt sich der Regeneriervorgang derart steuern, dass ein Härtedurchbruch vermieden wird und gleichzeitig die in der DIN EN 14763 vorgegebene minimale Austauscherkapazität von 4 mol (400 g CaCO3) pro Kilo eingesetztem Regeneriersalz eingehalten wird, während der zweite Näherungswert die Verschneideeinrichtung derart genau steuert, dass die in der DIN 19636-100 festgelegten Toleranzgrenzen für das Verschnittwasser erfüllt sind.

K1 besitzt hier in Fig. 3 eine Steigung von etwa 31 µS/cm°dH und verläuft als Ursprungsgerade, während K2 eine Steigung von etwa 39 µS/cm°dH besitzt und ebenfalls als Ursprungsgerade verläuft.

Die Leitfähigkeit des Rohwassers wird gemäß Fig. 2 mittels der (hier linearen) Umrechnungsfunktion UF aus der experimentell bestimmten Leitfähigkeit des enthärteten Wassers abgeleitet. Aus der Leitfähigkeit des Rohwassers werden dann gemäß Fig. 3 mittels der Kalibrierfunktionen K1 bzw. K2 die Gesamthärten I bzw. II des Rohwassers abgeleitet. Die Gesamthärten I bzw. II des Rohwassers können auch durch Kombination der Umrechnungsfunktion UF und der Kalibrierfunktionen K1 bzw. K2 direkt aus der gemessenen Leitfähigkeit $LF_{weich}$ des enthärteten Wassers abgeleitet werden.

Wird die Leitfähigkeit LF im Verschnittwasser statt im voll enthärteten Wasser experimentell bestimmt, so muss die Umrechnungsfunktion UF entsprechend den prozentualen Anteilen der beiden Teilströme gewichtet werden.

Man beachte, dass die Umrechnungsfunktion UF und die Kalibrierfunktionen K1 und K2 im gezeigten Beispiel als Geraden verlaufen, was die rechnerische Beschreibung der Funktionen erleichtert. Grundsätzlich sind aber erfindungsgemäß auch nicht-lineare Funktionen für die Bestimmung der Gesamthärten I und II denkbar, die beispielsweise als Polynome angenähert werden.

**Patentansprüche**

**1.** Verfahren zum Betrieb einer Wasserbehandlungsanlage (1), mit

- einer Enthärtungsvorrichtung (4), insbesondere umfassend ein Ionentauscherharz (7),
- einem Leitfähigkeitssensor (9),
- einer elektronischen Steuereinrichtung (13) und
- einer automatisch verstellbaren Verschneideeinrichtung zum Mischen eines Verschnittwasserstromes $V(t)_{verschnitt}$ aus einem ersten, enthärteten Teilstrom $V(t)_{teil1weich}$ und einem zweiten, rohwasserführenden Teilstrom $V(t)_{teil2roh}$,

wobei die Leitfähigkeit $LF_{weich}$ des enthärteten Wassers oder die Leitfähigkeit $LF_{verschnitt}$ des Verschnittwassers experimentell bestimmt wird,
**dadurch gekennzeichnet,**
**dass** aus der experimentell bestimmten Leitfähigkeit $LF_{weich}$ des enthärteten Wassers oder $LF_{verschnitt}$ des

Verschnittwassers die Leitfähigkeit $LF_{roh}$ des Rohwassers und/oder die Gesamthärte des Rohwassers abgeleitet wird,

wobei bei der Ableitung der Leitfähigkeit $LF_{roh}$ des Rohwassers und/oder der Gesamthärte des Rohwassers aus der experimentell bestimmten Leitfähigkeit $LF_{weich}$ des enthärteten Wassers oder $LF_{verschnitt}$ des Verschnittwassers mittels einer oder mehrerer Funktionen eine Korrektur der unterschiedlichen Leitfähigkeit eines Calcium- oder Magnesiumions einerseits und zweier Natrium-Ionen andererseits erfolgt,

und **dass** die abgeleitete Leitfähigkeit $LF_{roh}$ des Rohwassers und/oder Gesamthärte des Rohwassers dazu verwendet wird, die Härte des Verschnittwasserstroms $V(t)_{verschnitt}$ durch eine entsprechende Einstellung des Mischungsverhältnisses der beiden Teilströme $V(t)_{teil1weich}$ und $V(t)_{teil2roh}$ auf einen vorgegebenen Sollwert (SW) einzustellen.

2. Verfahren nach Anspruch 1, **dadurch gekennzeichnet, dass** aus der experimentell bestimmten Leitfähigkeit $LF_{weich}$ des enthärteten Wassers mittels einer Umrechnungsfunktion UF die Leitfähigkeit $LF_{roh}$ des Rohwassers abgeleitet wird, mit $LF_{roh} = UF(LF_{weich})$.

3. Verfahren nach Anspruch 2, **dadurch gekennzeichnet, dass** die Umrechnungsfunktion UF als ein konstanter Umrechnungsfaktor UFK gewählt ist, mit $LF_{roh} = UFK \cdot LF_{weich}$,
wobei $0{,}90 \leq UFK \leq 0{,}99$, und bevorzugt $0{,}93 \leq UFK \leq 0{,}97$.

4. Verfahren nach einem der Ansprüche 2 oder 3, **dadurch gekennzeichnet, dass** eine Gesamthärte I des Rohwassers, die zur Steuerung eines Regeneriervorgangs der Enthärtungsvorrichtung (4) verwendet wird, mittels einer ersten Kalibrierfunktion K1 aus der abgeleiteten Leitfähigkeit $LF_{roh}$ des Rohwassers abgeleitet wird,
und dass eine Gesamthärte II des Rohwassers, die zur Steuerung der Verschneideeinrichtung verwendet wird, mittels einer zweiten Kalibrierfunktion K2 aus der abgeleiteten Leitfähigkeit $LF_{roh}$ des Rohwassers abgeleitet wird.

5. Verfahren nach Anspruch 1, **dadurch gekennzeichnet, dass** eine Gesamthärte I des Rohwassers, die zur Steuerung eines Regeneriervorgangs der Enthärtungsvorrichtung (4) verwendet wird, direkt mittels einer ersten Gesamtkalibrierfunktion GK1 aus der experimentell bestimmten Leitfähigkeit $LF_{weich}$ des enthärteten Wassers abgeleitet wird,
und dass eine Gesamthärte II des Rohwassers, die zur Steuerung der Verschneideeinrichtung verwendet wird, direkt mittels einer zweiten Gesamtkalibrierfunktion GK2 aus der experimentell bestimmten Leitfähigkeit $LF_{weich}$ des enthärteten Wassers abgeleitet wird.

6. Verfahren nach Anspruch 1, **dadurch gekennzeichnet, dass** die Leitfähigkeit $LF_{roh}$ des Rohwassers aus der experimentell bestimmten Leitfähigkeit $LF_{verschnitt}$ des Verschnittwassers mit der Formel

$$LF_{verschnitt} = \frac{V(t)_{teil1weich}}{V(t)_{verschnitt}} \cdot UF^{-1}(LF_{roh}) + \frac{V(t)_{teil2roh}}{V(t)_{verschnitt}} \cdot LF_{roh}$$

abgeleitet wird, insbesondere wobei die Formel nach $LF_{roh}$ aufgelöst ist, wobei UF eine Umrechnungsfunktion bezeichnet, mit der aus der Leitfähigkeit $LF_{weich}$ des enthärteten Wassers die Leitfähigkeit $LF_{roh}$ des Rohwassers erhalten wird, mit $LF_{roh} = UF(LF_{weich})$, und $UF^{-1}$ die Umkehrfunktion von UF bezeichnet.

7. Verfahren nach Anspruch 6, **dadurch gekennzeichnet, dass** die Umrechnungsfunktion UF als ein konstanter Umrechnungsfaktor UFK gewählt ist, mit $LF_{roh} = UFK \cdot LF_{weich}$,
wobei $0{,}90 \leq UFK \leq 0{,}99$, und bevorzugt $0{,}93 \leq UFK \leq 0{,}97$,
so dass gilt

$$LF_{roh} = \frac{LF_{verschnitt}}{\left( \dfrac{V(t)_{teil1weich}}{UFK \cdot V(t)_{verschnitt}} + \dfrac{V(t)_{teil2roh}}{V(t)_{verschnitt}} \right)} .$$

8. Verfahren nach einem der Ansprüche 6 oder 7, **dadurch gekennzeichnet,**

**dass** eine Gesamthärte I des Rohwassers, die zur Steuerung eines Regeneriervorgangs der Enthärtungsvorrichtung (4) verwendet wird, mittels einer ersten Kalibrierfunktion K1 aus der abgeleiteten Leitfähigkeit $LF_{roh}$ des Rohwassers abgeleitet wird,

und **dass** eine Gesamthärte II des Rohwassers, die zur Steuerung der Verschneideeinrichtung verwendet wird, mittels einer zweiten Kalibrierfunktion K2 aus der abgeleiteten Leitfähigkeit $LF_{roh}$ des Rohwassers abgeleitet wird.

9. Verfahren nach Anspruch 1, **dadurch gekennzeichnet, dass** eine Gesamthärte I des Rohwassers, die zur Steuerung eines Regeneriervorgangs der Enthärtungsvorrichtung (4) verwendet wird, direkt mittels einer ersten gewichteten Gesamtkalibrierfunktion GGK1 aus der experimentell bestimmten Leitfähigkeit $LF_{verschnitt}$ des Verschnittwassers und den beiden Teilströmen $V(t)_{teil1weich}$ und $V(t)_{teil2roh}$ abgeleitet wird,

und dass eine Gesamthärte II des Rohwassers, die zur Steuerung der Verschneideeinrichtung verwendet wird, direkt mittels einer zweiten gewichteten Gesamtkalibrierfunktion GGK2 aus der experimentell bestimmten Leitfähigkeit $LF_{verschnitt}$ des Verschnittwassers und den beiden Teilströmen $V(t)_{teil1weich}$ und $V(t)_{teil2roh}$ abgeleitet wird.

10. Wasserbehandlungsanlage (1), mit

- einer Enthärtungsvorrichtung (4), insbesondere umfassend ein Ionentauscherharz (7),
- einem Leitfähigkeitssensor (9),
- einer elektronischen Steuereinrichtung (13) und
- einer automatisch verstellbaren Verschneideeinrichtung zum Mischen eines Verschnittwasserstromes $V(t)_{verschnitt}$ aus einem ersten, enthärteten Teilstrom $V(t)_{teil1weich}$ und einem zweiten, rohwasserführenden Teilstrom $V(t)_{Teil2roh}$,
wobei der Leitfähigkeitssensor (9) im Bereich des enthärteten Wassers oder des Verschnittwassers angeordnet ist,

**dadurch gekennzeichnet,**

**dass** die Steuereinrichtung (13) zur Durchführung eines Verfahrens nach einem der vorhergehenden Ansprüche eingerichtet ist.

11. Wasserbehandlungsanlage (1) nach Anspruch 10, **dadurch gekennzeichnet, dass** die elektronische Steuereinrichtung (13) einen Speicher (18) mit mehreren abgespeicherten Kalibrierfunktionen (K1, K2) und/oder mit mehreren abgespeicherten Gesamtkalibrierfunktionen (GK1, GK2) und/oder mit mehreren abgespeicherten gewichteten Gesamtkalibrierfunktionen (GGK1, GGK2) zur Berechnung der Leitfähigkeit $LF_{roh}$ des Rohwassers und/oder der Gesamthärte des Rohwassers aus der Leitfähigkeit $LF_{weich}$ des enthärteten Wassers oder der Leitfähigkeit $LF_{verschnitt}$ des Verschnittwassers aufweist.

12. Wasserbehandlungsanlage (1) nach Anspruch 10 oder 11, **dadurch gekennzeichnet, dass** wenigstens zwei Durchflussmessgeräte (3) zur direkten oder indirekten experimentellen Bestimmung der Teilströme $V(t)_{teil1weich}$ und $V(t)_{teil2roh}$ vorhanden sind.

## Claims

1. Method for operating a water treatment system (1), having

- a softening device (4), in particular comprising an ionexchange resin (7),
- a conductivity sensor (9),
- an electronic control device (13), and
- an automatically adjustable blending device for mixing a blended water stream $V(t)_{blend}$ from a first, softened part-stream $V(t)_{part1soft}$ and a second, raw-water-carrying part-stream $V(t)_{part2raw}$, wherein the conductivity $LF_{soft}$ of the softened water or the conductivity $LF_{blend}$ of the blended water is determined experimentally,
**characterised in that**
the conductivity $LF_{raw}$ of the raw water and/or the total hardness of the raw water is derived from the experimentally determined conductivity $LF_{soft}$ of the softened water or $LF_{blend}$ of the blended water,
wherein in the derivation of the conductivity $LF_{raw}$ of the raw water and/or the total hardness of the raw water from the experimentally determined conductivity $LF_{soft}$ of the softened water or $LF_{blend}$ of the blended water, a correction of the different conductivities of one calcium or magnesium ion on the one hand and two sodium ions on the other hand is carried out by means of one or more functions, and **in that** the derived conductivity $LF_{raw}$ of the raw water and/or total hardness of the raw water is used to adjust the hardness of the blended water stream $V(t)_{blend}$ by correspondingly adjusting the mixing ratio of the two part-streams $V(t)_{part1soft}$ and $V(t)p_{art2raw}$ to a given desired value (SW).

2.  Method according to claim 1, **characterised in that** the conductivity $LF_{raw}$ of the raw water is derived from the experimentally determined conductivity $LF_{soft}$ of the softened water by means of a conversion function UF, with $LF_{raw} = UF(LF_{soft})$.

3.  Method according to claim 2, **characterised in that** the conversion function UF is chosen to be a constant conversion factor UFK, with $LF_{raw} = UFK*LF_{soft}$, wherein $0.90 \leq UFK \leq 0.99$ and preferably $0.93 \leq UFK \leq 0.97$.

4.  Method according to either claim 2 or claim 3, **characterised in that** a total hardness I of the raw water, which is used to control a regeneration operation of the softening device (4), is derived by means of a first calibration function K1 from the derived conductivity $LF_{raw}$ of the raw water, and **in that** a total hardness II of the raw water, which is used to control the blending device, is derived by means of a second calibration function K2 from the derived conductivity $LF_{raw}$ of the raw water.

5.  Method according to claim 1, **characterised in that** a total hardness I of the raw water, which is used to control a regeneration operation of the softening device (4), is derived directly by means of a first total calibration function GK1 from the experimentally determined conductivity $LF_{soft}$ of the softened water, and **in that** a total hardness II of the raw water, which is used to control the blending device, is derived directly by means of a second total calibration function GK2 from the experimentally determined conductivity $LF_{soft}$ of the softened water.

6.  Method according to claim 1, **characterised in that** the conductivity $LF_{raw}$ of the raw water is derived from the experimentally determined conductivity $LF_{blend}$ of the blended water with the formula

$$LF_{blend} = \frac{V(t)_{part1soft}}{V(t)_{blend}} \cdot UF^{-1}(LF_{raw}) + \frac{V(t)_{part2raw}}{V(t)_{blend}} \cdot LF_{raw}$$

in particular wherein the formula is solved for $LF_{raw}$, wherein UF denotes a conversion function with which the conductivity $LF_{raw}$ of the raw water is obtained from the conductivity $LF_{soft}$ of the softened water, with $LF_{raw} = UF(LF_{soft})$, and $UF^{-1}$ denotes the inverse function of UF.

7.  Method according to claim 6, **characterised in that** the conversion function UF is chosen to be a constant conversion factor UFK, with $LF_{raw} = UFK*LF_{soft}$, wherein $0.90 \leq UFK \leq 0.99$ and preferably $0.93 \leq UFK \leq 0.97$, so that

$$LF_{raw} = \frac{LF_{blend}}{\left( \dfrac{V(t)_{part1soft}}{UFK \cdot V(t)_{blend}} + \dfrac{V(t)_{part2raw}}{V(t)_{blend}} \right)} \quad .$$

8.  Method according to either claim 6 or claim 7, **characterised in that** a total hardness I of the raw water, which is used to control a regeneration operation of the softening device (4), is derived by means of a first calibration function K1 from the derived conductivity $LF_{raw}$ of the raw water, and **in that** a total hardness II of the raw water, which is used to control the blending device, is derived by means of a second calibration function K2 from the derived conductivity $LF_{raw}$ of the raw water.

9.  Method according to claim 1, **characterised in that** a total hardness I of the raw water, which is used to control a regeneration operation of the softening device (4), is derived directly by means of a first weighted total calibration function GGK1 from the experimentally determined conductivity $LF_{blend}$ of the blended water and the two part-streams $V(t)_{part1soft}$ and $V(t)_{part2raw}$, and **in that** a total hardness II of the raw water, which is used to control the blending device, is derived directly by means of a second weighted total calibration function GGK2 from the experimentally determined conductivity $LF_{blend}$ of the blended water and the two part-streams $V(t)_{part1soft}$ and $V(t)_{part2raw}$.

**10.** Water treatment system (1), having

- a softening device (4), in particular comprising an ionexchange resin (7),
- a conductivity sensor (9),
- an electronic control device (13), and
- an automatically adjustable blending device for mixing a blended water stream $V(t)_{blend}$ from a first, softened part-stream $V(t)_{part1soft}$ and a second, raw-water-carrying part-stream $V(t)_{part2raw}$,
wherein the conductivity sensor (9) is arranged in the region of the softened water or of the blended water,
**characterised in that**
the control device (13) is configured to carry out a method according to any one of the preceding claims.

**11.** Water treatment system (1) according to claim 10, **characterised in that** the electronic control device (13) has a memory (18) with a plurality of stored calibration functions (K1, K2) and/or with a plurality of stored total calibration functions (GK1, GK2) and/or with a plurality of stored weighted total calibration functions (GGK1, GGK2) for calculating the conductivity $LF_{raw}$ of the raw water and/or the total hardness of the raw water from the conductivity $LF_{soft}$ of the softened water or from the conductivity $LF_{blend}$ of the blended water.

**12.** Water treatment system (1) according to claim 10 or 11, **characterised in that** at least two flow meters (3) are present for the direct or indirect experimental determination of the part-streams $V(t)_{part1soft}$ and $V(t)_{part2raw}$.

**Revendications**

**1.** Procédé de fonctionnement d'une installation de traitement d'eau (1), comprenant

- un dispositif d'adoucissement (4), comprenant en particulier une résine échangeuse d'ions (7),
- un capteur de conductivité (9),
- un dispositif de commande électronique (13) et
- un dispositif de mitigeage à réglage automatique pour mélanger un courant d'eau mitigée $V(t)_{verschnitt}$ à partir d'un premier courant partiel d'eau adoucie $V(t)_{teil1weich}$ et d'un deuxième courant partiel d'eau brute $V(t)_{teil2roh}$, la conductivité $LF_{weich}$ de l'eau adoucie ou la conductivité $LF_{verschnitt}$ de l'eau mitigée étant déterminée de manière expérimentale,
**caractérisé en ce**
**que** la conductivité $LF_{roh}$ de l'eau brute et/ou la dureté totale de l'eau brute est déduite de la conductivité $LF_{weich}$ de l'eau adoucie ou $Lf_{verschnitt}$ de l'eau mitigée déterminée de manière expérimentale,
une correction de la conductivité différente d'un ion calcium ou magnésium d'une part et de deux ions sodium d'autre part étant effectuée au moyen d'une ou plusieurs fonctions lors de la déduction de la conductivité $LF_{roh}$ de l'eau brute et/ou la dureté totale de l'eau brute à partir de la conductivité $LF_{weich}$ de l'eau adoucie ou $LF_{verschnitt}$ de l'eau mitigée déterminée de manière expérimentale,
et **que** la conductivité $LF_{roh}$ de l'eau brute et/ou la dureté totale de l'eau brute déduite est utilisée pour régler la durée du courant d'eau mitigée $V(t)_{verschnitt}$ par un réglage correspondant du rapport de mélange des deux courants partiels $V(t)_{teil1weich}$ et $V(t)_{teil2roh}$ à une valeur de consigne (SW) prédéfinie.

**2.** Procédé selon la revendication 1, **caractérisé en ce que** la conductivité $LF_{roh}$ de l'eau brute est déduite de la conductivité $LF_{weich}$ de l'eau adoucie déterminée de manière expérimentale au moyen d'une fonction de conversion UF, avec $LF_{roh} = UF(LFH_{weich})$.

**3.** Procédé selon la revendication 2, **caractérisé en ce que** la fonction de conversion UF est choisie comme un facteur de conversion constant UFK, avec $LF_{roh} = UFK*LF_{weich}$, où $0{,}90 \leq UFK \leq 0{,}99$, et de préférence $0{,}93 \leq UFK \leq 0{,}97$.

**4.** Procédé selon une des revendications 2 ou 3, **caractérisé en ce qu'**une dureté totale I de l'eau brute qui est utilisée pour commander une opération de régénération du dispositif d'adoucissement (4) est déduite de la conductivité $LF_{roh}$ de l'eau brute déduite au moyen d'une première fonction d'étalonnage K1, et qu'une dureté totale II de l'eau brute qui est utilisée pour commander le dispositif de mitigeage est déduite de la

conductivité $LF_{roh}$ de l'eau brute déduite au moyen d'une deuxième fonction d'étalonnage K2.

**5.** Procédé selon la revendication 1, **caractérisé en ce qu'**une dureté totale I de l'eau brute qui est utilisée pour commander une opération de régénération du dispositif d'adoucissement (4) est déduite directement de la conductivité $LF_{weich}$ de l'eau adoucie déterminée de manière expérimentale au moyen d'une première fonction d'étalonnage total GK1,
et qu'une dureté totale II de l'eau brute qui est utilisée pour commander le dispositif de mitigeage est déduite directement de la conductivité $LF_{weich}$ de l'eau adoucie déterminée de manière expérimentale au moyen d'une deuxième fonction d'étalonnage total GK2.

**6.** Procédé selon la revendication 1, **caractérisé en ce que** la conductivité $LF_{roh}$ de l'eau brute est déduite de la conductivité $LF_{verschnitt}$ de l'eau mitigée déterminée de manière expérimentale avec la formule

$$LF_{verschnitt} = \frac{V(t)_{teil1weich}}{V(t)_{verschnitt}} \cdot UF^{-1}(LF_{roh}) + \frac{V(t)_{teil2roh}}{V(t)_{verschnitt}} \cdot LF_{roh},$$

la formule étant en particulier résolue en $LF_{roh}$, UF désignant une fonction de conversion avec laquelle la conductivité $LF_{roh}$ de l'eau brute est obtenue à partir de la conductivité $LF_{weich}$ de l'eau adoucie, avec $LF_{roh} = UF(LF_{weich})$, et $UF^{-1}$ désignant la fonction inverse de UF.

**7.** Procédé selon la revendication 6, **caractérisé en ce que** la fonction de conversion UF est choisie comme un facteur de conversion constant UFK, avec $LF_{roh} = UFK*LF_{weich}$,
où $0{,}90 \leq UFK \leq 0{,}99$, et de préférence $0{,}93 \leq UFK \leq 0{,}97$,
de sorte que s'applique

$$LF_{roh} = \frac{LF_{verschnitt}}{\left( \dfrac{V(t)_{teil1weich}}{UFK \cdot V(t)_{verschnitt}} + \dfrac{V(t)_{teil2roh}}{V(t)_{verschnitt}} \right)}.$$

**8.** Procédé selon une des revendications 6 ou 7, **caractérisé en ce qu'**une dureté totale I de l'eau brute qui est utilisée pour commander une opération de régénération du dispositif d'adoucissement (4) est déduite de la conductivité $LF_{roh}$ de l'eau brute déduite au moyen d'une première fonction d'étalonnage K1,
et qu'une dureté totale II de l'eau brute qui est utilisée pour commander le dispositif de mitigeage est déduite de la conductivité $LF_{roh}$ de l'eau brute déduite au moyen d'une deuxième fonction d'étalonnage K2.

**9.** Procédé selon la revendication 1, **caractérisé en ce qu'**une dureté totale I de l'eau brute qui est utilisée pour commander une opération de régénération du dispositif d'adoucissement (4) est déduite directement de la conductivité $LF_{verschnitt}$ de l'eau mitigée déterminée de manière expérimentale et des deux courants partiels $V(t)_{teil1weich}$ et $V(t)_{teil2roh}$ au moyen d'une première fonction d'étalonnage total pondérée GGK1,
et qu'une dureté totale II de l'eau brute qui est utilisée pour commander le dispositif de mitigeage est déduite directement de la conductivité $LF_{verschnitt}$ de l'eau mitigée déterminée de manière expérimentale et des deux courants partiels $V(t)_{teil1weich}$ et $V(t)_{teil2roh}$ au moyen d'une deuxième fonction d'étalonnage total pondérée GGK2.

**10.** Installation de traitement d'eau (1), comprenant

- un dispositif d'adoucissement (4), comprenant en particulier une résine échangeuse d'ions (7),
- un capteur de conductivité (9),
- un dispositif de commande électronique (13) et
- un dispositif de mitigeage à réglage automatique pour mélanger un courant d'eau mitigée $V(t)_{verschnitt}$ à partir d'un premier courant partiel d'eau adoucie $V(t)_{teil1weich}$ et d'un deuxième courant partiel d'eau brute $V(t)_{teil2roh}$, le capteur de conductivité (9) étant disposé dans la zone de l'eau adoucie ou de l'eau mitigée, **caractérisée en ce**

**que** le dispositif de commande (13) est conçu pour réaliser un procédé selon une des revendications précédentes.

11. Installation de traitement d'eau (1) selon la revendication 10, **caractérisée en ce que** le dispositif de commande électronique (13) comporte une mémoire (18) dans laquelle sont enregistrées plusieurs fonctions d'étalonnage (K1, K2) et/ou dans laquelle sont enregistrées plusieurs fonctions d'étalonnage total (GK1, GK2) et/ou dans laquelle sont enregistrées plusieurs fonctions d'étalonnage total pondérées (GGK1, GGK2) pour calculer la conductivité $LF_{roh}$ de l'eau brute et/ou la dureté totale de l'eau brute à partir de la conductivité $LF_{weich}$ de l'eau adoucie ou de la conductivité $LF_{verschnitt}$ de l'eau mitigée.

12. Installation de traitement d'eau (1) selon la revendication 10 ou 11, **caractérisée en ce qu'**au moins deux débitmètres (3) sont présents pour la détermination expérimentale directe ou indirecte des courants partiels $V(t)_{teil1weich}$ et $V(t)_{teil2roh}$.

$V(t)_{teil2roh}$

$V(t)_{roh}$

$V(t)_{teil1weich}$

$V(t)_{verschnitt}$

10

18

13

11

8

000
? m³

2

3

5

9

LF

15

14

4

7

6a

6b

12

16

17

1

Fig. 1

EP 2 512 994 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007013203 A1
- DE 102007059058 B3
- DE 10011692 A1
- EP 1002495 A1